## Europäisches Patentamt

## European Patent Office

## Office européen des brevets

(11) Veröffentlichungsnummer: **0 321 411**
**A2**

# EUROPÄISCHE PATENTANMELDUNG

(21) Anmeldenummer: **88810856.0**

(22) Anmeldetag: **12.12.88**

(51) Int. Cl.⁴: **E 04 F 15/02**
**E 04 F 15/00, B 32 B 5/18**

(30) Priorität: **15.12.87 CH 4872/87**

(43) Veröffentlichungstag der Anmeldung:
**21.06.89 Patentblatt 89/25**

(84) Benannte Vertragsstaaten:
**AT BE CH DE ES FR GB GR IT LI LU NL SE**

(71) Anmelder: **Sieber-Gadient, Paul**
**Felsbergstrasse 6**
**CH-6006 Luzern (CH)**

(72) Erfinder: **Sieber-Gadient, Paul**
**Felsbergstrasse 6**
**CH-6006 Luzern (CH)**

(74) Vertreter: **Kemény, Andreas**
**c/o Kemény AG Patentanwaltbüro Postfach 3414**
**CH-6002 Luzern (CH)**

(54) **Vorrichtung zum elektrisch leitenden Verlegen von Bodenbelägen.**

(57) Die Vorrichtung (1) ist eine mögliche Ausführungsform der erfindungsgemässen Vorrichtung. Ihre Unterseite (12) wird durch eine, die Unterseite (32) der Gewebe-Basisschicht (3) überziehenden, wegen ihrer unebenen Oberflächenstruktur, schwächer haftenden unteren Haftkleberschicht (2) abgeschlossen. Auf der Oberseite (31) der Gewebe-Basisschicht (3) ist mittels einer oben ebenen und daher besser haftenden mittleren Haftkleberschicht (34) eine Schaumstoffschicht (4) fixiert. Diese Schaumstoffschicht (4) gleicht im Gebrauch kleinere Unebenheiten so aus, dass die auf ihrer Oberseite (41), durch eine obere Haftkleberschicht (5) auf deren Oberseite (51) getragenen elektrischen Leitfäden (6), stets mit dem Bodenbelag in elektrisch leitendem Kontakt stehen. Somit können mit einer derartigen Vorrichtung (1) Antistatik-oder Ableit-Bodenbeläge auf jeden beliebigen Boden, ohne dass dieser zuvor aufwendig bearbeitet werden muss, derart verlegt werden, dass einerseits langfristig statische Ladungen sicher von ihm gegen Erde abgeleitet werden können; und andererseits aber, falls erwünscht, der Bodenbelag, ohne Beschädigung des Untergrundes, bei Erhaltung seiner eventuellen Wiederverwendbarkeit, vom Boden wieder aufgenommen werden kann.

FIG. 1

# Beschreibung

## Vorrichtung zum elektrisch leitenden Verlegen von Bodenbelägen

Die Erfindung betrifft eine Vorrichtung zum elektrisch leitenden Verlegen von Bodenbelägen nach dem Oberbegriff des Anspruchs 1. Als solche Bodenbeläge eignen sich sogenannte Anti-Statik- oder Ableit-Bodenbeläge, die man mit einer erfindungsgemässen Vorrichtung auch wieder aufnehmbar, vollflächig verlegen kann.

Der zunehmende Einsatz empfindlicher Elektronik in Büros, Labors, Produktionsstätten und im Privatbereich erfordert vermehrt die Anwendung von ESD-Schutzmassnahmen (ESD = Electrostatic-Discharge). Dabei geht es vorwiegend darum, zu verhindern, dass sich Personen elektrostatisch aufladen und sich danach, zum Beispiel über ein geerdetes, elektronische Bauteile enthaltendes Gerät, so zu entladen, dass im Gerät ein Schaden entsteht. Aber auch der Mensch soll von den Folgen elektrostatischer Entladungen geschützt werden.

Eine der wirkungsvollsten Massnahmen zum Schutz vor elektrostatischen Entladungen ist, die elektrostatische Aufladung gar nicht erst entstehen zu lassen, oder diese unmittelbar nach ihrer Enstehung (z.B. beim Begehen eines Kunststoffteppichs durch eine Person) möglichst unmittelbar so gegen Erde abzuleiten, dass keine für elektronische Bauteile gefährlichen Spannungen auftreten können. Zu diesem Zweck werden heute unter anderem sogenannte Anti-Statik- oder Ableit-Bodenbeläge, elektrisch leitend geerdet, verlegt. Sie weisen durch ihren speziellen Aufbau einen geringeren elektrischen Durchgangswiderstand als übliche Bodenbeläge auf.

Durch geeignete Verlegung eines solchen Bodenbelages kann bei gleichzeitigem Tragen von geeigneten Schuhen, ein elektrischer Ableitwiderstand (Gesamtwiderstand "Mensch-Erde") R kleiner 10 hoch 8 Ohm erreicht werden. Dazu ist es wichtig, dass nicht nur die Schuhe und der Bodenbelag einen relativ geringen Durchgangswiderstand (R kleiner 10 hoch 8 Ohm) aufweisen, sondern auch die Uebergangswiderstände zwischen Schuhsohle und Bodenbelag sowie auch zwischen Bodenbelag und Erde möglichst klein sind.

Durch geeignete Oberflächenbeschaffenheit der Schuhsohlen und des Bodenbelages kann der Uebergangswiderstand zwischen Schuh und Bodenbelag minimiert werden.

Um den Uebergangswiderstand zwischen Bodenbelag und Erde möglichst klein zu halten, muss dieser Bodenbelag mit geeigneten, elektrisch leitfähigen Mitteln verlegt werden Bislang hat man dazu elektrisch leitfähige Spatelmassen, Kleber und diese erdende Kupferbänder verwendet. Dabei muss der Untergrund in arbeitsintensiver und zeitraubender Weise vorbereitet werden, wobei dort mehrere unterschiedliche Schichten aufgebaut werden, bevor der Bodenbelag, mittels eines elektrisch leitenden Klebstoffs, befestigt werden kann. Im weiteren sind die so verlegten Bodenbeläge schlecht oder gar nicht, ohne Beschädigung des Untergrundes, wiederaufnehmbar. Die Wiederverwendbarkeit des Bodenbelags ist dabei praktisch ausgeschlossen.

Der Erfindung liegt die Aufgabe zu Grunde, eine wirtschaftlich vorteilhafte Möglichkeit zu schaffen, mit der ein Bodenbelag, elektrisch leitend, einfach verlegt werden kann, wobei die elektrostatischen Ladungen überall von ihm sicher gegen Erde abgeleitet werden können. Es können dann keine gefährlichen Spannungen auftreten. Dabei soll vorzugsweise die Wiederaufnehmbarkeit des so verlegten Bodenbelags vom Boden, ohne Beschädigung des Bodens, und allenfalls auch die Wiederverwendbarkeit des Bodenbelages, möglich sein.

Zur Lösung dieser Aufgabe wird eine in Anspruch 1 definierte Vorrichtung vorgeschlagen.

Die Vorrichtung eignet sich zum elektrisch leitenden Verlegen von ausreichend leitfähigen Bodenbelägen auf verschiedensten Untergründen, ohne, dass diese zuvor speziell behandelt werden müssen.

Dabei ist vorteilhaft, dass nur an einer beliebigen Stelle des Bodens, nur ein, vorzugsweise quer zur Hauptrichtung der elektrischen Leiter angeordneter, elektrischer Erdleiter, zum Beispiel ein Kupferband, zwischen den Bodenbelag und die Vorrichtung eingelegt und an Erde gelegt zu werden braucht.

Wenn man bevorzugterweise wenigstens einige der elektrischen Leiter, insbesondere in Längsrichtung der Vorrichtung, zueinander parallel verlaufen lässt, und dabei einen relativ kleinen seitlichen Abstand (wenige Millimeter bis einige wenige Centimeter) der Leiter einhält, bekommt man bereits einen guten Erdungseffekt durch einen querverlaufenden Erdungsleiter, zum Beispiel ein Kupferband.

Wenn man weiter bevorzugterweise ausserdem noch , zum Beispiel schräg verlaufende, zu den parallelen Leitern kreuzend verlaufende Leiter verwendet, kann an praktisch jeder Stelle eines Leiters ein Erdungsleiter angeschlossen werden.

Um den Leitern eine gute Haftung an der Selbstkleberschicht zu verleihen und um sie trotzdem zur Kontaktierung des Bodenbelags günstig anordnen zu können, dabei aber die Klebfähigkeit der oberen Seite der Haftkleberschicht nicht über Gebühr zu schmälern, ist es vorteilhaft, wenn die elektrischen Leiter teilweise in die Haftkleberschicht und/oder auch in die Schaumstoffschicht eingebettet sind.

Die Schaumstoffschicht kann direkt auf die Basisschicht aufgeschäumt sein, zum Beispiel als Latexschaum, oder sie kann an die Basisschicht angeklebt sein, wobei die Verwendung eines Haftklebers gute Dienste Leisten kann.

Wenn man ein nicht spaltbares Gewebe als Basisschicht verwendet, kann man beidseits Haftkleberschichten vorsehen. In diesem Falle ist es möglich an der Oberseite der Basisschicht eine plane, durchgehende und somit stark haftende Haftkleberschicht zum Ankleben der Schaumstoffschicht vorzusehen; wogegen man an der Unterseite der Basisschicht eine unebene, durchgehende Haftkleberschicht verwenden kann, so dass gegenüber dem Boden eine begrenzte Haftklebung entsteht, welche die schadenlose Wiederaufnahme ermöglicht.

Man kann aber auch ein kartonartig steifes Flächengebilde als Basisschicht verwenden, die man wie oben geschildert mit der Schaumstoffschicht verbinden kann. Man kann sie je nach den Ansprüchen mit dem Boden verkleben oder lose lassen.

Die elektrischen Leiter sind vorzugsweise schmal, damit sie die Klebkraft der Haftkleberschicht nicht beeinträchtigen, wobei dünne und somit biegsame Drähte oder Litzen (Bündel von sehr feinen Drähtchen), aber auch textilähnlich feine Fäden mit allerdünnsten Metalldrähtchen (Metallfasern) nützlich sind.

Weil diese elektrischen Leiter sozusagen eine beinahe flächige Ableitung an der Rückseite des Bodenbelags bewerkstelligen können, brauchen die übrigen Vorrichtungsteile nicht elektrisch leitend zu sein, so dass sie optimal auf ihre Funktionen ausgerichtet werden können (beispielsweise: Kleben bei der Haftkleberschicht; Ausgleichen bei der Schaumstoffschicht; Erhalten der Dimensionsstabilität bei der Basisschicht). Es kann nämlich für die Dauerhaftigkeit von Eigenschaften der beispielsweise geschilderten Art sehr schädlich sein, wenn abweichende Kriterien bei der Herstellung Rücksicht finden müssen.

Man muss also bei den Eigenschaften der erfindungsgemässen Vorrichtung keine Leitfähigkeitskompromisse eingehen, während solche bislang unvermeidlich erschienen.

Somit ermöglicht es die Erfindung einen geeigneten Bodenbelag, den jeweiligen Bedürfnissen entsprechend, leitend zu verlegen und somit zu erden, wobei dies auf einfachste Weise und ohne mühsame und unangenehme Vorarbeiten geschehen kann. Man legt dazu die Unterseite der Vorrichtung auf einen Boden, während die Oberseite in an sich bekannter Weise durch eine Schutzfolie, z.B. ein silikonisiertes Papier, geschützt bleibt. Wenn die Unterseite eine Haftkleberschicht hat, klebt man die Vorrichtung dabei auf den Boden. Man zieht die obere Schutzfolie ab und legt dadurch die Haftkleberschicht und die darauf befindlichen elektrischen Leiter frei, so dass der nun aufgelegte Bodenbelag gleichzeitig am Haftkleber fixiert und mit den elektrischen Leitern elektrisch leitend verbunden wird.

Die Erfindung wird nachstehend anhand der rein schematischen Zeichnung beispielsweise besprochen. Es zeigen:

Fig. 1 ein auf zwei Seiten geschnittenes stark überhöhtes Schaubild einer ersten Ausführungsform der erfindungsgemässen Vorrichtung mit einer Gewebe-Basisschicht, die als Doppelklebeband ausgeführt ist,

Fig. 2 ein der Fig. 1 ähnliches Schaubild einer zweiten Ausführungsform der erfindungsgemässen Vorrichtung, mit direkt auf eine kartonartige Basisschicht aufgeschäumter Schaumstoffschicht, wobei die Basisschicht unten und oben keine Haftkleberschicht aufweist, In der Zeichnung sind die Teile wie folgt bezeichnet:

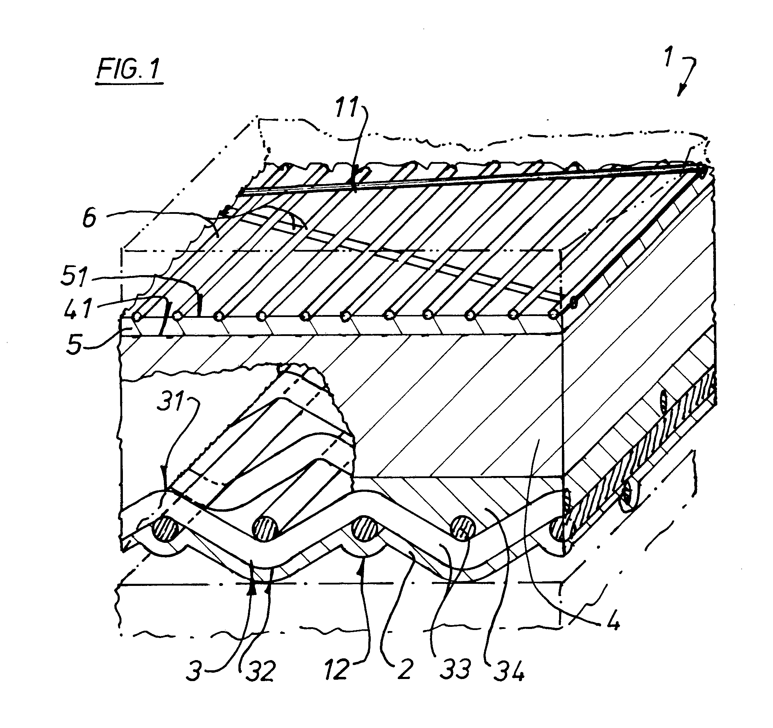

1 erste Ausführungsform der Vorrichtung (Fig. 1)
11 Oberseite von 1, gleichzeitig Oberseite von 6
12 Unterseite von 1, gleichzeitig Unterseite von 2
2 untere Haftkleberschicht (uneben)
3 Gewebe-Basisschicht
31 Oberseite von 3
32 Unterseite von 3, an der 2 haftet
33 Fäden von 3
34 mittlere Haftkleberschicht (eben) auf 31
4 Schaumstoffschicht, an 34 haftend
41 Oberseite von 4
5 Obere Haftkleberschicht auf 41
51 Oberseite von 5
6 elektrische Leiterfäden, teilweise in 5 eingebettet

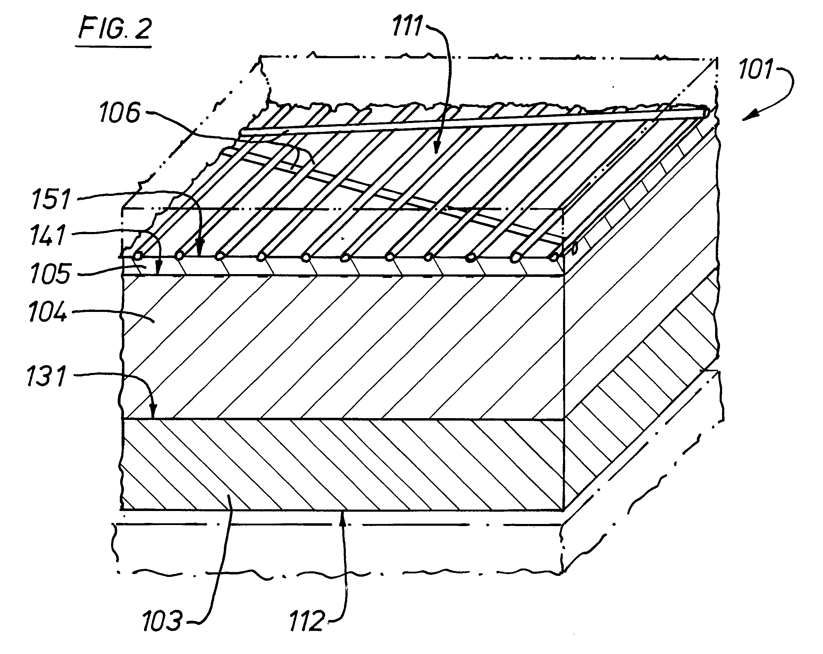

101 zweite Ausführungsform der Vorrichtung (Fig. 2)
111 Oberseite von 101, gleichzeitig Oberseite von 106
112 Unterseite von 101, gleichzeitig Unterseite von 103
103 kartonartig steife Basisschicht, z.B. ein Vliesstoff
(nachstehend Karton-Basisschicht genannt)
131 Oberseite von 103
104 Schaumstoffschicht, auf 131 aufgeschäumt haftend
141 Oberseite von 104
105 Obere Haftkleberschicht auf 141
151 Oberseite von 105
106 elektrische Leiterfäden, teilweise in 105 eingebettet

Die Vorrichtungen 1 und 101 weisen je eine im Gebrauch dem Bodenbelag (in der Zeichnung doppelstrichpunktiert angedeutet) zugewendete Oberseite 11 bzw. 111 und je eine im Gebrauch dem Boden (in der Zeichnung strichpunktiert angedeutet) zugewendete Unterseite 12 bzw. 112 auf.

Die Basisschicht der Vorrichtung 1 ist so als Doppelklebband ausgeführt, dass die auf der Unterseite 32 des dehnfesten Traggewebes 3 befindliche untere Haftkleberschicht 2 wegen ihres unebenen Verlaufs schwächer haftet, als die auf der Oberseite 31 des Traggewebes aufgebrachte mittlere Haftkleberschicht 34.

Das Traggewebe besteht vorteilhafterweise aus einem Stapelfasergarn, z.B. bewährterweise Zellwolle, das durch seine rauhe Oberfläche dem Haftkleber guten Halt bietet.

Als Haftkleber eignet sich speziell eine Acryl-Dispersion, angereichert mit klebrig machenden Harzen, sowie UV- und Alterungsschutz, wobei auch Weichmacherunempfindlichkeit errreichbar ist.

Die beiden Haftkleberschichten 2 und 34 sind in den Zwischenräumen des Traggewebes 3 miteinander verbunden, was die Unspaltbarkeit der Basisschicht fördert.

Mittels der mittleren Haftkleberschicht 34 wird bei Vorrichtung 1 auf dem Traggewebe 3 die Schaumstoffschicht 4, z.B. Polyäthylenschaum, fixiert.

Die Schaumstoffschicht 4 trägt auf ihrer Oberseite 41 eine obere Haftkleberschicht 5, deren Zusammensetzung mit derjenigen der beiden anderen Haftkleberschichten 2 und 34 übereinstimmen kann.

Auf der Oberseite 51 der oberen Haftkleberschicht 5 sind elektrische Leitfäden 6 so aufgebracht, dass sie nach oben elektrisch kontaktfähig sind.

Die elektrischen Leitfäden 6 enthalten vorteilhafterweise korrosionsresistente elektrisch leitende Drähtchen, z.B. aus Edelstahl, damit die elektrischen Ableiteigenschaften der Vorrichtung 1 langfristig gewährleistet werden können.

Die Schaumstoffschicht 4 gleicht im Gebrauch kleinere Unebenheiten so aus, dass die elektrischen Leitfäden 6 elektrisch leitend sicher mit dem Bodenbelag (in der Zeichnung doppelstrichpunktiert angedeutet) in Berührung stehen und dass die Klebkraft der Oberseite 51 der oberen Haftkleberschicht 5 nicht unzureichend geschmälert wird.

Dabei sind, durch den Anpressdruck des Bodenbelags und die Klebkraft der oberen Haftkleberschicht, die elektrischen Leitfäden 6 teilweise in die Haftkleberschicht 5 und die Schaumstoffschicht 4 eingebettet.

Die Vorrichtung 101 beinhaltet eine Karton-Basisschicht 103, auf deren Oberseite 131 eine Schaumstoffschicht 104, z.B. ein Latexschaum, direkt aufgeschäumt haftet.

Auf der Oberseite 141 der Schaumstoffschicht 104 befindet sich wie bei Vorrichtung 1 eine obere Haftkleberschicht 105, auf deren Oberseite 151 elektrische Leitfäden 106 haften.

Wie bei Vorrichtung 1 gleicht auch hier die Schaumstoffschicht 104 im Gebrauch kleinere Unebenheiten so aus, dass eine einwandfreie elektrische Kontaktierung ,der auch hier bevorzugterweise aus geeignetem Material bestehenden, elektrischen Leitfäden mit dem Bodenbelag (in der Zeichnung doppelstrichpunktiert angedeutet) langfristig garantiert werden kann.

Dabei sind die elektrischen Leitfäden 106, aus oben beschriebenen Gründen, teilweise in die Haftkleberschicht 105 und in die Schaumstoffschicht 104 eingelassen.

## Patentansprüche

1. Vorrichtung zum elektrisch leitenden Verlegen eines Bodenbelages, mit einer im Gebrauch dem Boden zugekehrten Unterseite und einer im Gebrauch dem Bodenbelag zugekehrten Oberseite, DADURCH GEKENNZEICHNET, dass sie an oder nahe ihrer Unterseite (12; 112) eine Basisschicht (3; 103) aufweist, deren Oberseite (31; 131) mit einer, eine Dicke von 0,5 bis mehrere Millimeter aufweisenden, Schaumstoffschicht (4; 104) verbunden ist, auf deren Oberseite (41; 141) eine Haftkleberschicht (5; 105) vorgesehen ist, auf deren Oberseite (51; 151) elektrische Leiter (6; 106) derart haftend angeordnet sind, dass sie an der Oberseite (11; 111) kontaktfähig freiliegen.

2. Vorrichtung nach Anspruch 1, dadurch gekennzeichnet, dass wenigstens einige der elektrischen Leiter (6; 106) zueinander parallel verlaufen.

3. Vorrichtung nach Anspruch 1 oder 2, dadurch gekennzeichnet, dass sich kreuzende und elektrisch leitend berührende elektrische Leiter (6; 106) vorgesehen sind.

4. Vorrichtung nach einem der Ansprüche 1 bis 3, dadurch gekennzeichnet, dass die elektrischen Leiter (6; 106) teilweise in die Haftkleberschicht (5; 105) und gegebenenfalls auch in die Schaumstoffschicht (4; 104) eingebettet sind.

5. Vorrichtung nach einem der Ansprüchen 1 bis 4, dadurch gekennzeichnet, dass die Schaumstoffschicht (4) mit der Basisschicht (3) durch Aufschäumen, Verschweissen oder Kleben, insbesondere mittels einer Haftkleberschicht (34) verbunden ist.

6 Vorrichtung nach einem der Ansprüche 1 bis 5, dadurch gekennzeichnet, dass auf der Unterseite (32) der Basisschicht (3) eine Haftkleberschicht (2) vorgesehen ist

7. Vorrichtung nach einem der Ansprüche 1 bis 6, dadurch gekennzeichnet, dass die Basisschicht als unspaltbares Traggewebe (3) ausgebildet ist, auf dessen Oberseite (31) eine oben plane durchgehende Haftkleberschicht (34) vorgesehen ist, während auf ihrer Unterseite (32) eine unten unebene durchgehende Haftkleberschicht (2) vorgesehen ist.

8. Vorrichtung nach einem der Ansprüche 1 bis 7, dadurch gekennzeichnet, dass die Basisschicht (103) als ein kartonartig steifes Flächengebilde ausgebildet ist

9. Vorrichtung nach einem der Ansprüche 1 bis 8, dadurch gekennzeichnet, dass die elektrischen Leiter (6; 106) Drähte, Litzen und/oder textilartige Metallfäden enthaltende Gebilde sind.

10. Vorrichtung nach einem der Ansprüche 1 bis 9, dadurch gekennzeichnet, dass die elektrischen Leiter (6; 106) die einzigen durchgehend elektrisch leitenden Materialien der Vorrichtung (1; 101) sind.

FIG. 1

FIG. 2

101

111

112

103

131

104

105

141

151

106